(19) Europäisches Patentamt
European Patent Office
Office européen des brevets

(11) Numéro de publication : 0 433 194 A1

# (12) DEMANDE DE BREVET EUROPEEN

(21) Numéro de dépôt : 90420541.6

(51) Int. Cl.$^5$ : A01N 43/84

(22) Date de dépôt : 12.12.90

(30) Priorité : 13.12.89 FR 8916750

(43) Date de publication de la demande : 19.06.91 Bulletin 91/25

(84) Etats contractants désignés : AT BE CH DE DK ES FR GB GR IT LI LU NL SE

(71) Demandeur : RHONE-POULENC AGROCHIMIE
14-20, rue Pierre Baizet
F-69009 Lyon (FR)

(72) Inventeur : Paviot, Jean
22, chemin De Maintenue
F-69650 St-Germain au Mont d'Or (FR)

(74) Mandataire : Ranguis, Patrick Frédéric et al
RHONE POULENC AGROCHIMIE Service DPI
B.P. 9163
F-69263 Lyon Cédex 09 (FR)

## (54) Association fongicide à effet synergique à base d'une morpholine et d'un triazole.

(57) L'invention a pour objet une association fongicide à effet synergique contenant au moins une 4-[3-(aryloxyphényl)-2-méthylpropyl] 2,6-diméthylmorpholine (I) et un triazole (II) choisi parmi les triazoles à cycles tétrahydrofuranne, cyclopentane ou dioxolanne, le rapport molaire de (I) à (II) étant de préférence compris entre 0.1 et 10.

L'invention se réfère également à la composition fongicide à base de cette association et au procédé de traitement des végétaux tant à titre curatif que préventif de ladite association ou de la dite composition.

EP 0 433 194 A1

# ASSOCIATION FONGICIDE A EFFET SYNERGIQUE A BASE D'UNE MORPHOLINE ET D'UN TRIAZOLE

L'invention a pour objet une association fongicide à usage phytosanitaire comprenant au moins un composé de la famille des morpholines et au moins un composé de la famille des triazoles, la composition fongicide comprenant ladite association et au moins un support inerte acceptable en agriculture, le procédé de traitement des végétaux à titre préventif ou curatif à l'aide desdites associations ou compositions fongicides.

De telles associations sont déjà connues, notamment par EP-A-237483 qui décrit l'association synergique de fenpropimorphe, 4-[3-(4-tert-butylphényl)-2-méthylpropyl]-cis-2,6-diméthylmorpholine et du propiconazole, 1-[2-(2,4-dichlorophényl)-4-propyl-1,3-dioxolan-2-ylméthyl]-1H-1,2,4-triazole, ou par EP-A-230844 qui décrit une association synergique fongicide comprenant le furconazole, (2RS, 5RS : 2RS, 5SR) 5-(2,4 dichlorophényl) tétrahydro-5-(1H-1,2,4-triazol-1-ylméthyl)-2-furyl-2,2,2-trifluoroéthyléther et le fenpropimorphe.

Il est néanmoins toujours souhaitable de trouver d'autres associations fongicides et/ou d'améliorer celles précédemment connues.

Ainsi, compte tenu de l'art antérieur discuté ci-dessus et qui est, à la connaissance du déposant, celui qui permet d'illustrer le plus complètement l'état de la technique conformément à l'article 9, paragraphe c du décret du 19 septembre 1979, n° 79.822, ou à la règle 27, paragraphe c de la CBE, on peut définir les objets de l'invention de la façon suivante :

- proposer d'autres associations fongicides à effet synergique,
- proposer des associations fongicides synergiques améliorées,
- proposer des associations fongicides utiles dans le traitement préventif ou curatif des oïdium et piétinverse, notamment l'oïdium des cucurbitacés,
- proposer une nouvelle association qui résulte d'un choix limité effectué parmi un nombre pratiquement infini de possibilités et qui procure des avantages importants qui seront mieux compris à la lumière de ce qui va être décrit ci-après.

Ainsi, de manière parfaitement inattendue, l'association améliore de façon notable et surprenante l'action respective et isolée des deux matières actives pour un certain nombre de champignons particulièrement nuisibles dans les cultures, notamment des concombres, courgettes, melons, cela, tout en conservant une absence de phytotoxicité vis-à-vis des cultures. Il en découle donc une amélioration du spectre d'activité et une possibilité de diminuer la dose respective de chaque matière active utilisée, cette dernière qualité étant particulièrement importante pour des raisons écologiques aisément compréhensibles.

Ainsi, l'association présente un remarquable degré de synergisme comme c'est défini par PML Tammes, Netherlands Journal of Plant Pathology, 70 (1964), p. 7380 dans un article articulé "Isoboles, une représentation graphique de synergie dans les pesticides" ou comme défini par Limpel, L.E., P.H. Schuldt and D. Lamont, 1962, Proc. NEWCC 16 : 48-53, en utilisant la formule :

$$E = X + Y - \frac{XY}{100}$$

Où E est le pourcentage attendu d'inhibition de la croissance du champignon par un mélange des deux fongicides à des doses définies, X est le pourcentage d'inhibition observé de la croissance par le fongicide A à une dose définie, Y est le pourcentage d'inhibition observé de la croissance par le fongicide B à une dose définie. Quand le pourcentage d'inhibition observé de l'association est plus grand que E, il y a synergie.

En particulier, l'association objet de la présente invention s'est révélée spécialement efficace pour contrôler :

- l'oïdium des cucurbitacées du à plusieurs champignons pathogènes voisins, en particulier :
  * Erysiphe cichoracearum,
  * Sphaerotheca fuliginea.

Ces champignons sont capables de parasiter les feuilles des plantes de la famille des Cucurbitacées, en particulier les melons, concombres et courgettes, qu'ils soient cultivés en serre ou en plein air ; ils se développent à la surface des feuilles, dès leur plus jeune âge et émettent à l'intérieur des suçoirs qui prélèvent les éléments nutritifs de la sève au détriment des cellules végétales, il en résulte une réduction de leur croissance et leur mort, donc une perte de production pour l'agriculteur.

D'autres champignons que l'oïdium seraient susceptibles d'être maîtrisés selon le même procédé, en particulier les rouilles (Puccinia recondita) et l'oïdium d'autres plantes cultivées telles que les céréales (Erysiphe graminis), la vigne et les arbres fruitiers, ou la tavelure du pommier et du poirier.

L'association présente également l'intérêt de permettre de lutter contre des souches de sensibilité réduite

(souche résistante) à l'un ou l'autre des fongicides pris séparément.

L'invention se définit ainsi :

Association fongicide à effet synergique comprenant un mélange de :

- au moins un 4-[3-(aryloxyphényl)-2-méthylpropyl] 2,6-diméthylmorpholine de formule :

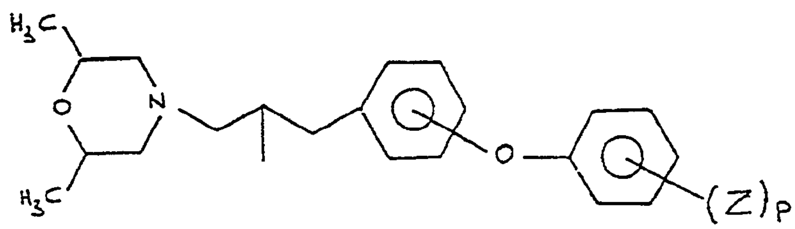

(I)

dans laquelle :

p est un nombre entier de 0 à 3,

Z est un atome d'halogène, un groupe $C_1$-$C_4$ alkyle, $C_1$-$C_2$ alkoxy, halo ($C_1$-$C_2$) alkyl, halo ($C_1$-$C_2$) alkoxy, $NO_2$, CN, méthylènedioxy.

Avantageusement, le composé est le 4-[3-(4-chlorophénoxyphényl)-2-méthylpropyl]-2,6-diméthylmorpholine et répond à la formule suivante :

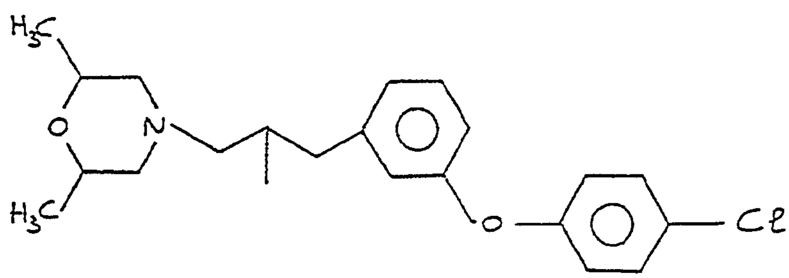

(Ia)

Ces composés, décrits dans EP-A-262870 du 24 septembre 1987, peuvent exister sous la forme d'un mélange cis trans ou de préférence sous la forme majoritaire, à plus de 70% ou pure, cis.

Evidemment, l'homme de métier comprend aisément que chaque stèreoisomère peut lui-même se résoudre en plusieurs énantiomères. Ceux-ci sont également compris dans l'invention. De préférence, on choisira un composé de formule I sous forme majoritaire cis à plus de 70%.

— au moins un triazole répondant à la formule :

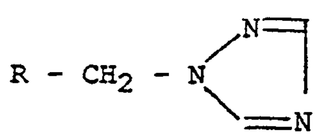

(II)

dans laquelle :

R est choisi parmi les cycles tétrahydrofurannes de formule :

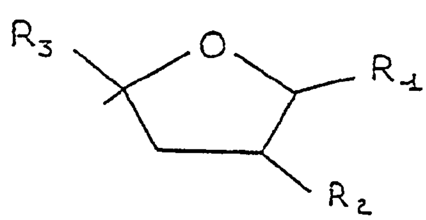

$R_1$ étant l'atome d'hydrogène, le groupe trifluoro 2,2,2 éthoxy, $C_1$-$C_2$ alcoxy,
$R_2$ étant l'atome d'hydrogène, le groupe $C_1$-$C_2$ alkyle et quand $R_1$ est l'atome d'hydrogène, $R_2$ peut être l'atome de chlore ou de brome,
$R_3$ est le groupe o-p dichlorophényle ou p-chlorophényle,
ou un cycle dioxolanne de formule :

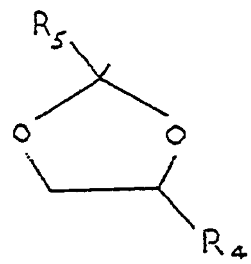

$R_4$ est le groupe $C_1$-$C_3$ alkyle,
$R_5$ a l'une des significations de $R_3$ ou est p-(p-chlorophénoxy) m-chlorophényle
ou un cycle cyclopentane de formule :

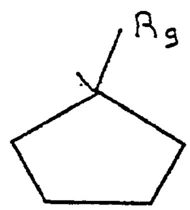

$R_9$ a la signification précédemment indiquée pour $R_3$.

Les composés de formule II sont décrits pour les cycles tétrahydrofurannes dans les demandes de brevets européens n° EP-A-121879, 151084, 230844.

Les composés de formule II sont décrits pour les cycles dioxolanne dans la demande de brevet allemande DE-OS-2752096 et les composés de formule II sont décrits pour le cycle cyclopentane dans la demande de brevet belge n° 867245.

Les contenus de ces demandes sont incorporés par référence pour ce qui concerne les procédés d'obtention de ces composés.

De préférence, on utilisera les composés à cycle tétrahydrofuranne où $R_1$ est le groupe trifluoro-2,2,2 éthoxy ou $R_1$ est l'atome d'hydrogène et $R_2$ l'atome de brome, $R_3$ étant dans tous les cas le groupe o,p-dichlorophényl ou les composés à cycle dioxolanne où $R_4$ est le groupe n-propyle ou éthyle et $R_5$ étant le groupe 2,4-diclorophényle.

Comme pour les morpholines, les triazoles peuvent exister sous plusieurs formes isomères diastéréoisomères et/ou enantiomères.

De préférence, dans le cas des dioxolannes préférés précités, $R_4$ est majoritairement ou purement du même côté du plan que le $CH_2$-triazole et dans le cas du tétrahydrofuranne où $R_2$ est H, $R_1$ est trifluoro-2,2,2 éthoxy ou $C_1$-$C_2$ alcoxy, ce groupe $R_1$ est majoritairement ou purement du même côté du plan que le $CH_2$-triazole, de même dans le cas où $R_2$ est Br ou Cl, ce groupe est du même coté, majoritairement ou purement, du plan que le triazole. Il s'agit donc de préférence de forme cis, majoritaire ou pure. Ces formes peuvent évidemment être résolues en enantiomères qui font également partie de l'invention.

Selon un mode préféré de réalisation, le rapport molaire de I sur II est compris entre 0,1 et 10, de préférence entre 0,2 et 5 et encore plus avantageusement entre 0,4 et 2,5.

L'invention a également pour objet l'utilisation, pour la lutte, tant préventive que curative, contre les champignons, de l'association selon l'invention. Par le terme préventif, on entend le traitement des végétaux avant le début et pour empêcher une infection.

Parmi les champignons qui peuvent être combattus par l'association selon l'invention, on peut citer : les champignons responsables de l'oïdium (Erysiphe, Cichoracearum, Sphaerotheca fuliginea, et d'autres organismes des genres Erysiphe, comme Erysiphe graminis Podosphoera, Uncinula, Venturia et Puccinia comme Puccinia recondita

Pour leur emploi pratique, les association selon l'invention sont rarement utilisées seules. Le plus souvent, elles font partie de compositions. Ces compositions, utilisables pour la protection des végétaux contre les maladies fongiques, contiennent comme matière active une association selon l'invention telle que décrite précédemment en combinaison avec les supports solides ou liquides, acceptables en agriculture et, éventuellement, les agents tensio-actifs également acceptables en agriculture. En particulier sont utilisables les supports inertes et usuels et les agents tensio-actifs usuels.

Ces compositions contiennent habituellement entre 0,5 et 95% de composé selon l'invention.

Par le terme "support", dans le présent exposé, on désigne une matière organique ou minérale, naturelle ou synthétique, avec laquelle la matière active est associée pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, cétones, fractions de pétrole, hydrocarbures aromatiques ou paraffiniques, hydrocarbures chlorés, gaz liquéfiés, etc...).

L'agent tensioactif peut être un agent émulsionnant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est généralement indispensable lorsque la matière active et/ou le support inerte ne sont pas solubles dans l'eau et que l'agent vecteur de l'application est l'eau.

Pour leur application, les associations selon l'invention se trouvent donc généralement sous forme de compositions ; ces compositions selon l'invention sont elles-mêmes sous des formes assez diverses, solides ou liquides.

Comme formes de compositions solides, on peut citer les poudres pour poudrage ou dispersion (à teneur en composé de formule (I) pouvant aller jusqu'à 100%) et les granulés, notamment ceux obtenus par extrusion, par compactage, par imprégnation d'un support granulé, par granulation à partir d'une poudre (la teneur en composé de formule (I) dans ces granulés étant entre 1 et 80% pour ces derniers cas).

Comme formes de compositions liquides ou destinées à constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudre à pulvériser), les pâtes.

Les concentrés émulsionnables ou solubles comprennent le plus souvent 10 à 80% de matière active, les émulsions ou solutions prêtes à l'application contenant, quant à elles, 0,01 à 20% de matière active.

Ces compositions peuvent contenir aussi toute sorte d'autres ingrédients tels que, par exemple, des colloïdes thixotropes, des agents de pénétration, des stabilisants, des séquestrants, etc... ainsi que d'autres matières actives connues à propriétés pesticides (notamment insecticides ou fongicides) ou à propriétés favorisant la croissance des plantes (notamment des engrais) ou à propriétés régulatrices de la croissance des plantes. Plus généralement les composés selon l'invention peuvent être associés à tous les additifs solides ou liquides correspondant aux techniques habituelles de la mise en formulation.

Par exemple, en plus du solvant, les concentrés émulsionnables peuvent contenir quand c'est nécessaire, 2 à 20% d'additifs appropriés comme les stabilisants, les agents tensio-actifs, les agents de pénétration, les inhibiteurs de corrosion, les colorants ou les adhésifs précedemment cités.

L'invention concerne également un procédé pour combattre ou prévenir les maladies fongiques caractérisé en ce que l'on applique sur les feuillages verts des végétaux une dose efficace de l'association selon l'invention.

De préférence, la dose efficace sera comprise entre 5 et 1000 g /ha. Cette dose étant fonction du végétal traité, du degré d'infestation, des conditions climatiques.

Avantageusement, cette dose sera comprise entre 10 et 500 g/ha.

Parmi les végétaux convenant pour le traitement selon l'invention, on peut citer plus particulièrement :

* les cultures légumières telles que concombres, épinards, scorsonnères, tomates, pois, betterave ;

* les cultures arboricoles telles que les pommiers, poiriers, noyers et plus généralement les fruits à noyaux, la vigne ;

* les cultures de céréales telles que le blé et l'orge.

L'invention va maintenant être décrite par rapport à des exemples concrets de réalisation qui ne sont bien sûr donnés qu'à titre indicatif ne pouvant en aucune façon limiter la portée de l'invention.

Pour ces essais, le triazole (a) est soit le (2RS, 5RS) 5-(2,4 dichlorophényl) tétrahydro-5-(1H-1,2,4-triazol-1-ylméthyl)-2-furyl-2,2,2-trifluoroéthyléther sous forme de suspension concentrée à raison de 250 g/l, soit le 1-[4-bromo 2-(2,4-dichlorophenyl) tetrahydro 2-furanylmethyl] 1H 1,2,4-triazole sous forme d'une suspension

concentrée à 200g/l et la morpholine (b) est la 4-[3-(4-chlorophénoxyphényl)-2-méthylpropyl]-2,6-diméthylmorpholine et est sous forme de concentré émulsionnable à raison de 500 g/l.

Essais avec le triazole (2RS, 5RS) 5-(2,4 dichlorophényl) tétrahydro-5-(1H-1,2,4-triazol-1-ylméthyl)-2-furyl-2,2,2-trifluoroéthyléther

On mélange les deux liquides dans un pulvérisateur de manière à obtenir les doses de 15 g/ha de a) et 25 g/ha de b) en tenant compte du fait que la pulvérisation permet une application de 1000 l/ha de liquide.

Des plants de concombres ou courgettes ou melons charentais en motte de tourbe sont repiqués (l'infection des plants par l'oïdium est survenue postérieurement au repiquage à une date non-déterminée dépendant des conditions climatiques et de manière entièrement naturelle) en 16 parcelles (4 répétitions de 4 parcelles) d'un nombre déterminé de plants, une parcelle étant non traitée dans chaque répétition.

* Exemple 1 :

Des melons charentais contaminés par Erysiphe cichoracearum (oïdium) sont pulvérisés avec le mélange indiqué ci-dessus, à intervalles réguliers, tous les 8 à 10 jours après le repiquage.

La lecture est faite dix jours après la deuxième pulvérisation et sept jours après la quatrième.

Les résultats sont indiqués ci-après.

— Première lecture : (10 jours après la deuxième pulvérisation) :
les résultats sont indiqués en pourcentage de réduction de la surface foliaire malade par rapport au témoin non traité :

| | |
|---|---|
| (a) seul à 15 g/ha | 84 |
| (b) seul à 25 g/ha | 92 |
| (a)+(b) | 99 |

— Deuxième lecture : (7 jours après la quatrième pulvérisation) :

| | |
|---|---|
| (a) seul à 15 g/ha | 12 |
| (b) seul à 25 g/ha | 11 |
| (a)+(b) | 52 |

* Exemple 2 :

Des courgettes variété "diamant" contaminées par Erysiphe cichoracearum (oïdium) sont pulvérisées avec le mélange indiqué ci-dessus, à intervalles réguliers tous les dix jours après le repiquage.

La lecture est faite cinq jours après le quatrième traitement et cinq jours après le cinquième traitement.

On observe comme dans l'exemple 1, le pourcentage de réduction de surface foliaire malade par rapport au témoin non traité.

— Première lecture : (5 jours après la quatrième traitement) :

| | |
|---|---|
| (a) seul à 15 g/ha | 19 |
| (b) seul à 25 g/ha | 34, 6 |
| (a)+(b) | 72, 1 |

— Deuxième lecture : (5 jours après le cinquième traitement) :

| | |
|---|---|
| (a) seul à 15 g/ha | 26,4 |
| (b) seul à 25 g/ha | 67,3 |
| (a)+(b) | 88 |

* Exemple 3 :

Des concombres variété "Rochet" contaminés par Erysiphe cichoracearum (oïdium) sont pulvérisés avec le mélange indiqué ci-dessus, à intervalles réguliers tous les quatorze jours après le repiquage.

La lecture est effectuée quatre jours après le troisième traitement de deux manières différentes :

1) Pourcentage de réduction de surface foliaire malade,

2) pourcentage de réduction du nombre de feuilles malades.

1) Surface foliaire :

| | |
|---|---|
| (a) seul à 15 g/ha | 45 |
| (b) seul à 25 g/ha | 24 |
| (a)+(b) | 71 |

2) Nombre de feuilles :

| | |
|---|---|
| (a) seul à 15 g/ha | 46 |
| (b) seul à 25 g/ha | 30 |

| | |
|---|---|
| (a)+(b) | 72 |

* Exemple 4 :

Des concombres variété "Brunex" contaminés par Erysiphe cichoracearum (oïdium) sont pulvérisés avec le mélange indiqué ci-dessus, à intervalles réguliers tous les 8 à 10 jours après le repiquage.

La lecture est effectuée cinq jours après le troisième traitement, et douze jours après le quatrième traitement sur la cinquième, dixième et quinzième feuille en partant de l'extrémité.

— Première lecture : (5 jours après le troisième traitement) :

| | |
|---|---|
| (a) seul à 15 g/ha | 53 |
| (b) seul à 25 g/ha | 63 |
| (a)+(b) | 96 |

— Deuxième lecture : (12 jours après le quatrième traitement) :

| | 5ème feuille | 10ème feuille | 15ème feuille |
|---|---|---|---|
| (a) seul à 15 g/ha | 34 | 38 | 44 |
| (b) seul à 25 g/ha | 59 | 61 | 45 |
| (a) + (b) | 94 | 88 | 92 |

Conclusion :

Ces résultats montrent clairement le degré de synergisme important obtenu avec l'association selon l'invention.

Essais avec le triazole 1-[4-bromo 2-(2,4-dichlorophenyl) tetrahydro 2-furanylmethyl] 1H 1,2,4-triazole

* Exemple 5

Du blé d'hiver de la variété Avalon, semé en automne, a été traité au stade ouverture de la dernière gaine foliaire par pulvérisation foliaire avec l'une des bouillies ci-dessous :

A) Composé (b), sous forme de suspension concentrée 500 g/l diluée dans l'eau, à la dose de 200 g matière active/ha

B) Triazole (a), sous forme de suspension concentrée 200 g/l diluée dans l'eau, à la dose de 200 g matière.active/ha

C) Les composés (b) et (a), mélangés dans le pulvérisateur (tank-mix) de manière à obtenir

200 g (a)+200 g (b) /ha

34 jours après le traitement, on a observé le pourcentage de feuilles attaquées par l'oïdium (Erysiphe graminis) en considérant la dernière feuille en dessous de l'épi.

On obtient les résultats ci-dessous :

| | Pourcentage de feuilles malades |
|---|---|
| A | 100 |
| B | 37 |
| C | 16 |

On observe donc une synergie remarquable lors de l'action simultanée des deux composés.

* Exemple 6

De l'orge d'hiver, de la variété Thésée, semée en automne, a été traitée au stade "3 noeuds" et au stade floraison, par pulvérisation foliaire avec l'une des bouillies ci-dessous

A) Composé (b) sous forme de suspension concentrée 500 g/l diluée dans l'eau, à la dose de 100 g matière active/ha

B) Composé (b) sous la forme de suspension concentrée 500 g/l diluée dans l'eau, à la dose de 200 g mactière active/ha

C) Composé (a) sous forme de suspension concentrée 200 g/l diluée dans l'eau, à la dose de 200 g matière active/ha

D) Les composés (a) et (b), mélangés dans le pulvérisareur (tank-mix) de manière à obtenir 100 g (b)+ 200 g (a)

E) Les composés (a) et (b), mélangés dans le pulvérisateur (tank-mix) de manière à obtenir 200 g (b)+ 200 g (a)

27 jours après le deuxième traitement, on a observé le pourcentage de feuilles attaquées par la rouille brune (Puccinia recondita) en considérant la deuxième feuille en dessous de l'épi.

On obtient les résultats suivants :

| | Pourcentage de feuilles malades |
|---|---|
| A | 100 |
| B | 100 |
| C | 37 |
| D | 17 |
| E | 16 |

On observe donc une synergie remarquable lors de l'action simultanée des deux composés.

## Revendications

1. Association fongicide contenant un mélange de :

- au moins une 4-[3-(aryloxyphényl)-2-méthylpropyl] 2,6-diméthylmorpholine de formule :

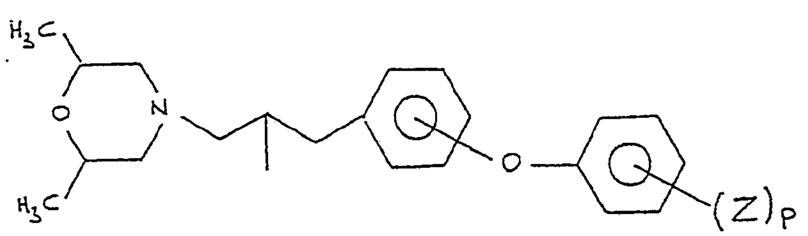

(I)

dans laquelle :

p est un nombre entier de 0 à 3,

Z est un atome d'halogène, un groupe $C_1$-$C_4$ alkyle, $C_1$-$C_2$ alkoxy, halo($C_1$-$C_2$) alkyl, halo($C_1$-$C_2$) alkoxy, $NO_2$, CN, méthylènedioxy.

- au moins un triazole répondant à la formule :

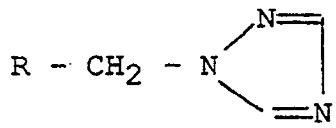

(II)

dans laquelle :
R est choisi parmi les cycles tétrahydrofurannes de formule :

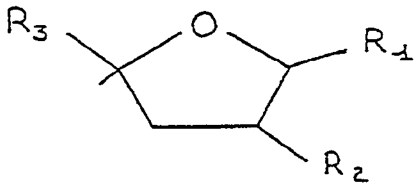

$R_1$ étant l'atome d'hydrogène, le groupe trifluoro 2,2,2 éthoxy, $C_1$-$C_2$ alcoxy,
$R_2$ étant l'atome d'hydrogène, le groupe $C_1$-$C_2$ alkyle et quand $R_1$ est l'atome d'hydrogène, $R_2$ peut être l'atome de chlore ou de brome,
$R_3$ est le groupe o-p dichlorophényle ou p-chlorophényle,
ou un cycle dioxolanne de formule :

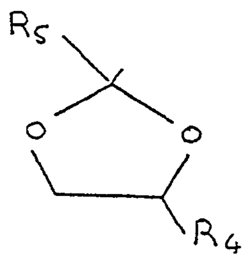

$R_4$ est le groupe $C_1$-$C_3$ alkyle,
$R_5$ a l'une des significations de $R_3$ ou est p-(p-chlorophénoxy) m-chlorophényle
ou un cycle cyclopentane de formule :

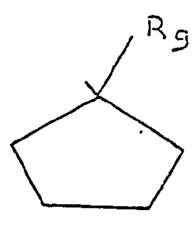

$R_9$ a la signification précédemment indiquée pour $R_3$.

**2.** Association selon la revendication 1, caractérisée en ce que la morpholine I est la 4-[(3-(4-chlorophénoxyphényl)-2-méthylpropyl]-2,6-diméthylmorpholine et répond à la formule suivante :

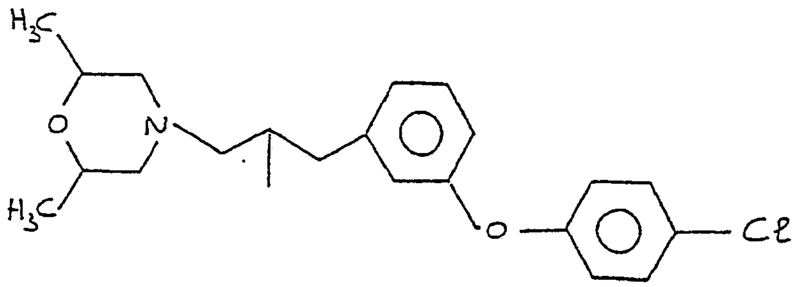

(Ia)

3. Association selon l'une des revendications 1 ou 2, caractérisée en ce que le composé I est sous forme majoritaire cis à plus de 70%.

4. Association selon la revendication 1, caractérisée en ce que le triazole de formule (II) est tel qu'il est choisi parmi ceux ayant :
   - un cycle tétrahydrofuranne où $R_1$ est le groupe trifluoro-2,2,2 éthoxy ou $R_1$ est l'atome d'hydrogène et $R_2$ l'atome de brome, $R_3$ étant dans tous les cas le groupe o,p-dichlorophényl,
   - ou les composés à cycle dioxolanne où $R_4$ est le groupe n-propyle ou éthyle et $R_5$ étant le groupe 2,4-diclorophényle.

5. Association selon la revendication 4, caractérisée en ce que les triazoles sont sous forme majoritaire cis.

6. Association selon l'une des revendications 1 à 5, caractérisée en que le rapport molaire I : II est compris entre 0,1 et 10.

7. Association selon la revendication 6, caractérisée en ce que le rapport molaire I : II est compris entre 0,2 et 5.

8. Composition fongicide contenant, à titre de matière active, 0,5 à 95% en poids de l'association selon l'une des revendications 1 à 7, en combinaison avec les supports solides ou liquides, acceptables en agriculture et/ou les agents tensio actifs également acceptables en agriculture.

9. Procédé pour combattre ou prévenir les maladies fongiques, caractérisé en que l'on applique sur les feuillages verts des végétaux, une dose efficace d'une association ou d'une composition selon l'une des revendications 1 à 8.

10. Procédé selon la revendication 9, caractérisé en ce que l'association est appliquée à raison de 5 à 1000 g/ha.

Office européen des brevets

# RAPPORT DE RECHERCHE EUROPEENNE

Numero de la demande

EP 90 42 0541

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,D | EP-A-237483 (CIBA-GEIGY AG.)<br>* le document en entier * | 1-10 | A01N43/84 |
| Y,D | EP-A-262870 (SUMITOMO CHEMICAL COMPANY)<br>* le document en entier * | 1-10 | |
| A | EP-A-48997 (F. HOFFMANN-LA ROCHE)<br>* revendications 1, 2, 7, 8, 10 * | 1, 6, 7 | |
| A | EP-A-252875 (CIBA-GEIGY AG.)<br>* le document en entier * | 1 | |
| A | EP-A-66196 (BASF AG.)<br>* pages 12 - 13; revendication 1 * | 1, 6 | |
| Y,D | EP-A-230844 (RHONE-POULENC AGROCHIMIE)<br>* le document en entier * | 1-10 | |
| A<br><br>D | FR-A-2391200 (ROHM AND HAAS COMPANY)<br>* le document en entier *<br>& BE-A-867245 | 1 | |
| | | | DOMAINES TECHNIQUES RECHERCHES (Int. Cl.5) |
| | | | A01N |

Le présent rapport a été établi pour toutes les revendications

| Lieu de la recherche | Date d'achèvement de la recherche | Examinateur |
|---|---|---|
| BERLIN | 29 JANVIER 1991 | RUFET, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)